(19) Europäisches Patentamt
European Patent Office
Office européen des brevets

(11) **EP 4 738 523 A1**

(12) **EUROPEAN PATENT APPLICATION**
published in accordance with Art. 153(4) EPC

(43) Date of publication:
**06.05.2026 Bulletin 2026/19**

(21) Application number: **23942872.5**

(22) Date of filing: **29.06.2023**

(51) International Patent Classification (IPC):
**H01M 10/0587** (2010.01)

(52) Cooperative Patent Classification (CPC):
Y02E 60/10; Y02P 70/50

(86) International application number:
**PCT/CN2023/103962**

(87) International publication number:
**WO 2025/000363 (02.01.2025 Gazette 2025/01)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Ningde Amperex Technology Limited
Ningde, Fujian 352100 (CN)**

(72) Inventors:
• **CHEN, Wen
  Ningde, Fujian 352100 (CN)**
• **SU, Shiwei
  Ningde, Fujian 352100 (CN)**
• **ZHANG, Juntao
  Ningde, Fujian 352100 (CN)**

(74) Representative: **Kraus & Lederer PartGmbB
Thomas-Wimmer-Ring 15
80539 München (DE)**

(54) **ELECTROCHEMICAL APPARATUS AND ELECTRICAL DEVICE**

(57)     This application discloses an electrochemical apparatus and an electrical device. The electrochemical apparatus includes a housing and an electrode assembly. The housing includes a first housing portion and a second housing portion with opposite polarities. The electrode assembly includes an electrode plate assembly, a first tab, and a second tab, where the electrode plate assembly includes a first electrode plate and a second electrode plate arranged in a wound manner, the first tab is connected to the first electrode plate and the first housing portion, and the second tab is connected to the second electrode plate and the second housing portion. The electrochemical apparatus further includes a first connector, the first connector including a first arc portion and satisfying: $30° \leq \gamma + (10.95 \times (R_1/R_0)^3 - 31.0144 \times (R_1/R_0)^2 + 28.88 \times (R_1/R_0) - 7.012) \times \beta_1 \leq 180°$; and/or, the electrochemical apparatus further includes a second connector, the second connector including a second arc portion and satisfying: $30° \leq \gamma - (10.95 \times (R_2/R_0)^3 - 31.0144 \times (R_2/R_0)^2 + 28.88 \times (R_2/R_0) - 7.012) \times \beta_2 \leq 180°$. This application facilitates the reduction of an axial magnetic field at an end face of the electrode plate assembly with a wound structure, thereby facilitating the reduction of interference of the electrochemical apparatus on the electrical device.

FIG. 2

EP 4 738 523 A1

## Description

## TECHNICAL FIELD

This application relates to the technical field of energy storage, and in particular, to an electrochemical apparatus and an electrical device.

## BACKGROUND

For a battery with a wound structure, due to its special spiral involute structure, a strong axial magnetic field is generated at an end face of the wound structure, thus causing significant interference on electrical devices such as Bluetooth earphones, and affecting normal use of the electrical devices. Therefore, how to reduce an axial magnetic field of a battery with a wound structure has become an urgent problem to be solved.

## SUMMARY

In view of this, this application provides an electrochemical apparatus to reduce an axial magnetic field of a battery with a wound structure, thereby reducing the interference of the electrochemical apparatus on an electrical device.

According to a first aspect of this application, an electrochemical apparatus is provided, where the electrochemical apparatus includes a housing and an electrode assembly; the housing includes a first housing portion and a second housing portion with opposite polarities; the electrode assembly is accommodated in the housing, and the electrode assembly includes an electrode plate assembly, a first tab, and a second tab; the electrode plate assembly includes a first electrode plate and a second electrode plate arranged in a wound manner, where the first electrode plate includes a first current collector and a first active layer located on a surface of the first current collector, and the second electrode plate includes a second current collector and a second active layer located on a surface of the second current collector; a winding start section of the first active layer is located on a wound inner side of the electrode plate assembly relative to a winding start section of the second active layer; the first tab is connected to a first region of a winding tail section of the first current collector and the first housing portion; the second tab is connected to a second region of a winding tail section of the second current collector and the second housing portion; along a winding direction of the electrode plate assembly from inside to outside, the first region extends beyond the second region; when viewed along a width direction of the first electrode plate, along the winding direction of the electrode plate assembly from inside to outside, an angle formed by rotating a ray from a winding center of the electrode plate assembly to a center of the second region to a ray from the winding center to a center of the first region is denoted as $\theta$; when a winding length of the first region extending beyond the second region is less than one turn, and $\gamma = 0$; when the winding length of the first region extending beyond the second region is greater than or equal to one turn, and the number of complete turns of the first region extending beyond the second region is n, and $\gamma = 360° \times n + \theta$; and a distance from the winding center of the electrode plate assembly to the center of the first region is denoted as $R_0$; where the electrochemical apparatus satisfies at least one of the following conditions:

(1) the electrochemical apparatus further includes a first connector located outside the housing, the first connector including a first end portion connected to the first housing portion, a second end portion configured to be connected to an external load, and a first arc portion located between the first end portion and the second end portion, where the first arc portion includes a first inner edge close to the winding center of the electrode plate assembly and a first outer edge away from the winding center, a distance from the winding center to the first inner edge is denoted as $R_{11}$, a distance from the winding center to the first outer edge is denoted as $R_{12}$, and an equivalent radius $R_1$ of the first arc portion is denoted as $(R_{11} + R_{12})/2$; and along an extension direction from the first end portion to the second end portion, the first arc portion includes a first start end and a first termination end; when an extension direction from the first start end to the first termination end is the same as the winding direction of the electrode plate assembly from inside to outside, along the winding direction of the electrode plate assembly from inside to outside, an angle formed by rotating a ray from the winding center of the electrode plate assembly to the first start end to a ray from the winding center to the first termination end is denoted as $\alpha_1$, and $\beta_1 = \alpha_1$; and when the extension direction from the first start end to the first termination end is opposite to the winding direction of the electrode plate assembly from inside to outside, along a direction opposite to the winding direction of the electrode plate assembly from inside to outside, the angle formed by rotating the ray from the winding center of the electrode plate assembly to the first start end to the ray from the winding center to the first termination end is denoted as $\alpha_1$, and $\beta_1 = -\alpha_1$; satisfying: $30° \leq \gamma + (10.95 \times (R_1/R_0)^3 - 31.0144 \times (R_1/R_0)^2 + 28.88 \times (R_1/R_0) - 7.012) \times \beta_1 \leq 180°$; or

(2) the electrochemical apparatus further includes a second connector located outside the housing, the second connector including a third end portion connected to the second housing portion, a fourth end portion configured to be connected to an external load, and a second arc portion located between the third end portion and the fourth end portion, where the second arc portion includes a second inner edge close to the winding center of the electrode plate assembly and a second outer edge away from the winding center, a distance from the winding center to the second inner edge is denoted as $R_{21}$, a distance from the winding center to the second outer edge is denoted as $R_{22}$, and an equivalent radius $R_2$ of the second arc portion is denoted as $(R_{21} + R_{22})/2$; and along an extension direction from the third end portion to the fourth end portion, the second arc portion includes a second start end and a second termination end; when an extension direction from the second start end to the second termination end is the same as the winding direction of the electrode plate assembly from inside to outside, along the winding direction of the electrode plate assembly from inside to outside, an angle formed by rotating a ray from the winding center of the electrode plate assembly to the second start end to a ray from the winding center to the second termination end is denoted as $\alpha_2$, and $\beta_2 = \alpha_2$; and when the extension direction from the second start end to the second termination end is opposite to the winding direction of the electrode plate assembly from inside to outside, along a direction opposite to the winding direction of the electrode plate assembly from inside to outside, the angle formed by rotating the ray from the winding center of the electrode plate assembly to the second start end to the ray from the winding center to the second termination end is denoted as $\alpha_2$, and $\beta_2 = -\alpha_2$; satisfying: $30° \leq \gamma - (10.95 \times (R_2/R_0)^3 - 31.0144 \times (R_2/R_0)^2 + 28.88 \times (R_2/R_0) - 7.012) \times \beta_2 \leq 180°$.

The inventors of this application have found through research that, due to a special spiral involute structure of the electrode plate assembly with a wound structure, an effective current path length of the first electrode plate on the wound inner side is less than that of the second electrode plate on the wound outer side, thereby generating a strong axial magnetic field at an end face of the electrode plate assembly. In this application, on the one hand, by extending the effective length of the first electrode plate located on the wound inner side, making the first region extends beyond the second region. When the electrode assembly discharges to generate current, a magnetic field generated by a portion of the first electrode plate extending beyond the second region can at least partially counteract an axial magnetic field generated by the spiral involute structure. On the other hand, by disposing the first arc portion in the first connector and/or the second arc portion in the second connector, and a central angle $\beta_1$ and equivalent radius $R_1$ of the first arc portion and an angle $\gamma$ of the first region extending beyond the second region are controlled to satisfy the above condition (1), and/or a central angle $\beta_2$ and equivalent radius $R_2$ of the second arc portion and the angle $\gamma$ of the first region extending beyond the second region are controlled to satisfy the above condition (2), the first arc portion and/or the second arc portion can compensate for the insufficiency in the counteraction of the axial magnetic field by the portion of the first electrode plate extending beyond the second region, and eliminate excessive counteraction of the axial magnetic field by the portion of the first electrode plate extending beyond the second region. Moreover, since the first arc portion and/or the second arc portion is located outside the housing, the axial magnetic field at the end face of the wound structure can be more effectively counteracted, thereby facilitating the reduction of interference of the electrochemical apparatus on the electrical device.

In some embodiments, when the electrochemical apparatus satisfies condition (1), $60° \leq \gamma + (10.95 \times (R_1/R_0)^3 - 31.0144 \times (R_1/R_0)^2 + 28.88 \times (R_1/R_0) - 7.012) \times \beta_1 \leq 120°$ is further satisfied. This can further reduce the axial magnetic field at the end face of the wound structure, thereby further reducing the interference on the electrical device.

In some embodiments, when the electrochemical apparatus satisfies condition (2), $60° \leq \gamma - (10.95 \times (R_2/R_0)^3 - 31.0144 \times (R_2/R_0)^2 + 28.88 \times (R_2/R_0) - 7.012) \times \beta_2 \leq 120°$ is further satisfied. This can further reduce the axial magnetic field at the end face of the wound structure, thereby further reducing the interference on the electrical device.

In some embodiments, the first tab includes a first connecting portion and a first bent portion, where the first connecting portion is connected to the first region, the first bent portion is bent toward a first end face of the electrode plate assembly, and along the width direction of the first electrode plate, the first bent portion is located on a side of the electrode plate assembly, and the first bent portion is connected to the first housing portion.

In some embodiments, the second tab includes a second connecting portion and a second bent portion, where the second connecting portion is connected to the second region, the second bent portion is bent toward a second end face of the electrode plate assembly, the second end face is opposite to the first end face along the width direction of the first electrode plate, and along the width direction of the first electrode plate, the second bent portion is located on a side of the electrode plate assembly facing away from the first bent portion.

In some embodiments, the first bent portion includes a third region connected to the first housing portion, and an angle between a ray from a center of the third region to the center of the first region and a ray from the center of the third region to the first start end is denoted as $\eta$, satisfying $\eta \leq 45°$. This facilitates the reduction of the influence of current passing through the first bent portion on the axial magnetic field, thereby further reducing the interference on the electrical device.

In some embodiments, the second housing portion includes a fourth region connected to the second bent portion, and an angle between a ray from a center of the fourth region to the center of the second region and a ray from the center of the fourth region to the second start end is denoted as $\delta$, satisfying $\delta \leq 45°$. This facilitates the reduction of the influence of current passing through the second bent portion on the axial magnetic field, thereby further reducing the interference on the electrical device.

In some embodiments, the first housing portion includes a top wall, a bottom wall, and a side wall, the second housing portion includes an electrode pole, the top wall is provided with a through hole, and the electrode pole is disposed in the through hole.

In some embodiments, the first connector is disposed on a side of the first end face. This can reduce the axial magnetic field on a side of the first end face, thereby reducing the interference of the side of the first end face on the electrical device.

In some embodiments, the second connector is disposed on a side of the second end face. This can reduce the axial magnetic field on the side of the second end face, thereby reducing the interference of the side of the second end face on the electrical device.

In some embodiments, along the winding direction of the electrode plate assembly from inside to outside, the winding tail section of the first current collector includes a blank section extending beyond the first region and not provided with the first active layer on a surface, and the blank section covers the winding tail section of the second current collector. Thus, the blank section of the first current collector is disposed between the winding tail section of the second current collector and the first housing portion, facilitating the enhancement of the isolation effect between the second current collector and the first housing portion, thereby facilitating the reduction of the risk of a short circuit caused by direct contact between the second current collector and the first housing portion.

In some embodiments, $30° \leq \gamma \leq 450°$. This is more conducive to exerting the counteraction effect of the portion of the first electrode plate extending beyond the second region. In some embodiments, $30° \leq \gamma \leq 180°$. In some embodiments, $60° \leq \gamma \leq 150°$.

In some embodiments, $15° \leq \alpha_1 \leq 210°$. This is more conducive to exerting the counteraction effect of the first arc portion. In some embodiments, $15° \leq \alpha_1 \leq 45°$. In some embodiments, $60° \leq \alpha_1 \leq 120°$. In some embodiments, $150° \leq \alpha_1 \leq 210°$.

In some embodiments, $15° \leq \alpha_2 \leq 210°$. This is more conducive to exerting the counteraction effect of the second arc portion. In some embodiments, $15° \leq \alpha_2 \leq 45°$. In some embodiments, $60° \leq \alpha_2 \leq 120°$. In some embodiments, $150° \leq \alpha_2 \leq 210°$.

In some embodiments, the winding length of the first region extending beyond the second region is less than one turn. This facilitates the reduction of the extension length of the first current collector, thereby reducing the risk of a short circuit due to misalignment caused by excessive extension of the first current collector.

In some embodiments, the first electrode plate is a negative electrode plate, and the second electrode plate is a positive electrode plate; where the winding start section of the first active layer extends beyond the winding start section of the second active layer along the direction opposite to the winding direction of the electrode plate assembly from inside to outside, and/or a winding tail section of the first active layer extends beyond a winding tail section of the second active layer along the winding direction of the electrode plate assembly from inside to outside. This facilitates the reduction of the risk of lithium precipitation, thereby improving the safety of the electrochemical apparatus.

In some embodiments, the electrode plate assembly further includes a first separator, where the first separator is disposed between the first electrode plate and the second electrode plate, and along the winding direction of the electrode plate assembly from inside to outside, a winding termination end of the first separator extends beyond the first electrode plate. This allows the winding tail end of the first electrode plate to be covered by the first separator, facilitating the reduction of the risk of direct contact between the first electrode plate and the second electrode plate.

In some embodiments, the electrode plate assembly further includes a second separator, where the second separator is disposed between the first electrode plate and the second electrode plate, and along the winding direction of the electrode plate assembly from inside to outside, a winding termination end of the second separator extends beyond the second electrode plate. This allows the winding tail section of the second electrode plate to be covered by the second separator, facilitating the reduction of the risk of direct contact between the second electrode plate and the first electrode plate or the housing.

In some embodiments, the electrochemical apparatus further includes an insulating member, and the insulating member is disposed between the housing and the electrode plate assembly. This facilitates the reduction of the risk of direct contact between the electrode plate assembly and the housing, thereby facilitating the reduction of the risk of an internal short circuit in the electrochemical apparatus.

According to a second aspect of this application, an electrical device is provided, where the electrical device includes the electrochemical apparatus according to any one of the above embodiments. The electrochemical apparatus in the above embodiments has a reduced axial magnetic field, which reduces electromagnetic interference on the electrical device, thereby improving the use reliability of the electrical device.

BRIEF DESCRIPTION OF DRAWINGS

FIG. 1 shows a schematic diagram of an electrical device according to an embodiment of this application.

FIG. 2 shows a schematic structural diagram of an electrochemical apparatus according to an embodiment of this application.

FIG. 3 shows a partial cross-sectional view of an electrochemical apparatus according to an embodiment of this application.

FIG. 4 shows a schematic diagram of winding of an electrode plate assembly according to an embodiment of this application.

FIG. 5 shows a schematic structural diagram of an electrode assembly according to an embodiment of this application.

FIG. 6 shows a top view of an electrochemical apparatus according to an embodiment of this application.

FIG. 7 shows a top view of an electrochemical apparatus according to another embodiment of this application.

FIG. 8 shows a top view of an electrochemical apparatus according to an embodiment of this application with the first housing portion hidden.

FIG. 9 shows a schematic diagram of winding of an electrode plate assembly according to another embodiment of this application.

Description of reference signs of main components:

| | |
|---|---|
| Electrochemical apparatus | 100 |
| Housing | 10 |
| First housing portion | 11 |
| Accommodation space | 11a |
| Top wall | 111 |
| Through hole | 1111 |
| Bottom wall | 112 |
| Side wall | 113 |
| Second housing portion | 12 |
| Mounting portion | 121 |
| Lead-out portion | 122 |
| Fourth region | 123 |
| Electrode assembly | 20 |
| Electrode plate assembly | 21 |
| First end face | 21a |
| Second end face | 21b |
| First electrode plate | 211 |
| First current collector | 2111 |
| First region | 211a |
| Blank section | 211b |
| First active layer | 2112 |
| Second electrode plate | 212 |
| Second current collector | 2121 |
| Second region | 212a |
| Second active layer | 2122 |
| First tab | 22 |
| First connecting portion | 221 |
| First bent portion | 222 |
| Third region | 222a |
| Second tab | 23 |
| Second connecting portion | 231 |
| Second bent portion | 232 |
| First separator | 24 |
| Second separator | 25 |
| First connector | 30 |

(continued)

| | |
|---|---|
| First end portion | 31 |
| Second end portion | 32 |
| First arc portion | 33 |
| First inner edge | 33a |
| First outer edge | 33b |
| First start end | 331 |
| First termination end | 332 |
| Second connector | 40 |
| Third end portion | 41 |
| Fourth end portion | 42 |
| Second arc portion | 43 |
| Second inner edge | 43a |
| Second outer edge | 43b |
| Second start end | 431 |
| Second termination end | 432 |
| Sealing member | 50 |
| Winding center | D |
| Width direction of first electrode plate | X |
| Winding direction of electrode plate assembly from inside to outside | C |
| Device body | 200 |
| Electrical device | 1000 |

## DETAILED DESCRIPTION

The technical solutions in some embodiments of this application will be described below with reference to the drawings. Apparently, the described embodiments are only some rather than all of the embodiments of this application.

It should be noted that in this application, "region center" refers to that a center of a region is the center of gravity of a planar shape of the region when the region is a continuous entirety. It can be understood that the center of gravity of the planar shape can be determined by a hanging method, where the planar shape is suspended with a thin string, a straight line is drawn vertically from a starting point of the string, the planar shape is suspended again at an endpoint different from the endpoint suspended for the first time, and another straight line is drawn in the same manner; an intersection of the two straight lines is the center of gravity of the planar shape. When a region is formed by multiple discrete regions, the center of the region is a center of the smallest circumscribed circle encompassing the multiple discrete regions. It can be understood that the smallest circumscribed circle is a circle with the smallest radius that encompasses the multiple discrete regions. When one component is deemed as being "connected to" another component, it may be connected to the another component directly or with a component possibly present therebetween. When one component is assumed as being "disposed on/in" another component, the component may be provided directly on/in the another component or with a component possibly present therebetween. The terms "top", "bottom", "upper", "lower", "left", "right", "front", "rear", and other similar expressions as used herein are for illustration only.

The terms "first", "second", and the like are merely intended to distinguish between different objects, and shall not be understood as any indication or implication of relative importance or any implicit indication of the number, sequence or primary-secondary relationship of the technical features indicated.

The term "parallel" is used to describe an ideal state between two components. In an actual production or use state, the two components may be in an approximately parallel state. The two components described as "parallel" may not be absolutely straight lines or planes; and they may be substantially straight or planar. From a macro perspective, a component can be considered as a "straight line" or "plane" as long as the overall extension direction is a straight line or a plane.

It should be recognized that the dimensions and thicknesses of the components shown in the drawings are for better understanding and easier description, and this application is not limited to the dimensions and thicknesses shown in the drawings.

Unless otherwise defined, all technical and scientific terms used herein have the same meanings as commonly understood by those skilled in the art to which this application belongs. The terms used in the specification of this application herein are only for the purpose of describing specific embodiments and are not intended to limit this application.

Some embodiments of this application will be described below with reference to the drawings. In the absence of conflict, the following embodiments and features in these embodiments can be combined with each other.

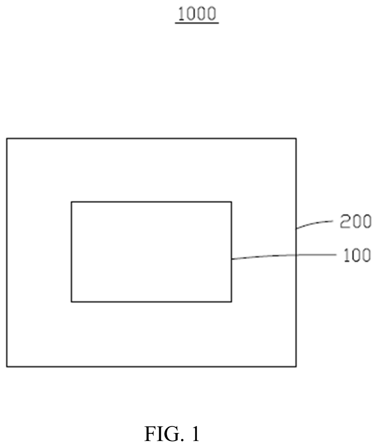

Referring to FIG. 1, an embodiment of this application provides an electrical device 1000, where the electrical device 1000 includes an electrochemical apparatus 100.

In some embodiments, referring to FIG. 1, the electrical device 1000 further includes a device body 200, where the electrochemical apparatus 100 is installed in the device body 200 and is configured to supply power to the device body 200.

In some embodiments, the electrical device 1000 may be a Bluetooth earphone, a Bluetooth speaker, a mobile phone, a laptop computer, a tablet computer, an e-book reader, an electric toy, a gaming console, a video recorder, a portable recorder, a radio, a smart watch, a lighting lamp, a calculator, or the like, which are not listed exhaustively here.

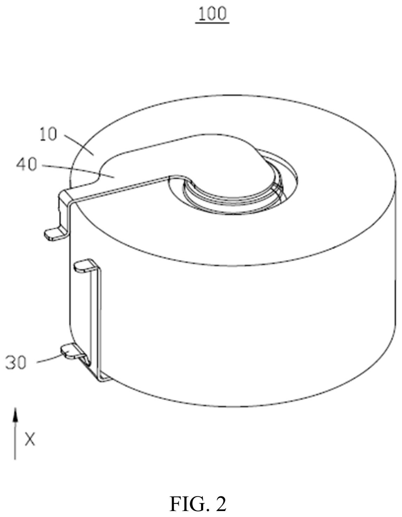

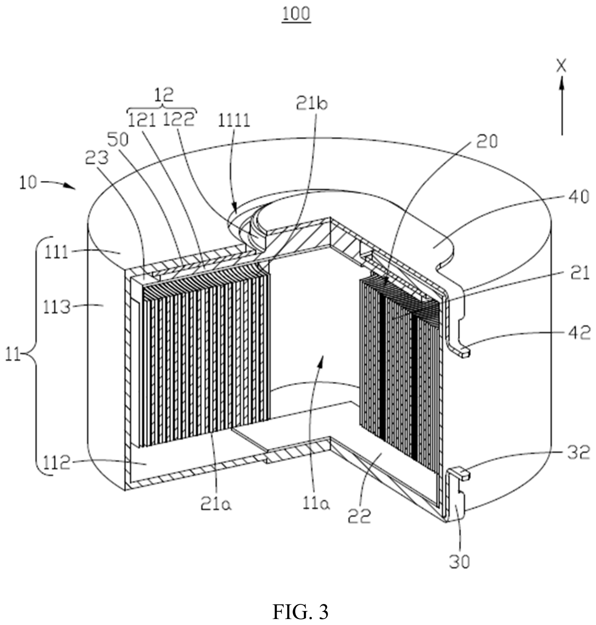

In some embodiments, referring to FIGs. 2 and 3, the electrochemical apparatus 100 includes a housing 10 and an electrode assembly 20, where the electrode assembly 20 is accommodated within the housing 10. The electrode assembly 20 includes an electrode plate assembly 21, a first tab 22, and a second tab 23, where the first tab 22 and the second tab 23 are both connected to the electrode plate assembly 21.

In some embodiments, referring to FIG. 3, the housing 10 includes a first housing portion 11 and a second housing portion 12, where the first housing portion 11 and the second housing portion 12 have opposite polarities and are connected to each other in an insulation manner.

In some embodiments, referring to FIG. 3, the first housing portion 11 includes a top wall 111, a bottom wall 112, and a side wall 113, where the side wall 113 is located between the top wall 111 and the bottom wall 112, and the top wall 111 and the bottom wall 112 are both connected to the side wall 113 and enclose to form an accommodation space 11a for accommodating the electrode assembly 20. The first housing portion 11 can protect the electrode assembly 20, reducing the risk of external impact on the electrode assembly 20.

In some embodiments, referring to FIG. 3, the second housing portion 12 includes an electrode pole, the top wall 111 is provided with a through hole 1111, and the electrode pole is disposed in the through hole 1111 and connected to the top wall 111 in an insulation manner.

In some embodiments, referring to FIG. 3, the electrode pole includes a mounting portion 121 and a lead-out portion 122, where the mounting portion 121 is located within the accommodation space 11a and connected to the electrode assembly 20, and the mounting portion 121 is also connected to the top wall 111 in an insulation manner. The lead-out portion 122 passes through the through hole 1111 and is at least partially exposed outside the accommodation space 11a.

In some embodiments, referring to FIG. 3, the electrochemical apparatus 100 further includes a sealing member 50, where the sealing member 50 is disposed between the top wall 111 and the mounting portion 121 to connect the mounting portion 121 to the top wall 111 in an insulation manner and seal the two.

In some embodiments, the sealing member 50 may be a sealant.

In some embodiments, the electrode pole may be made of conductive metal such as copper, aluminum, nickel, or iron. The electrode pole may be in a columnar shape, a hemispherical shape, a sheet-like shape, or a shape of a combination of the above shapes, which is not specifically limited here.

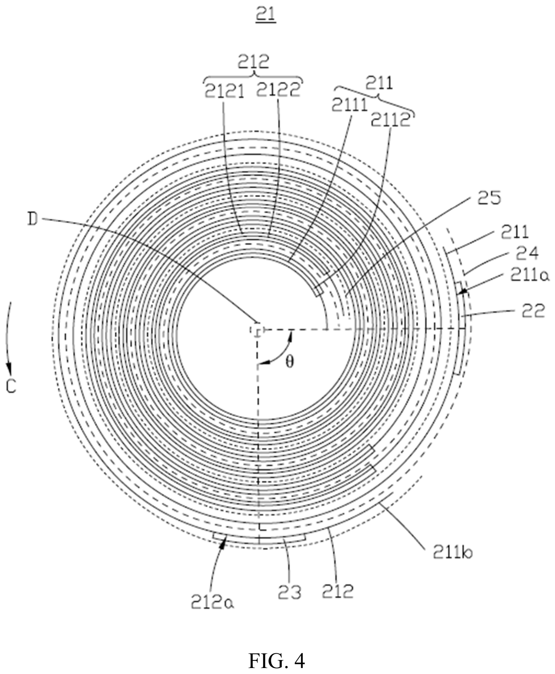

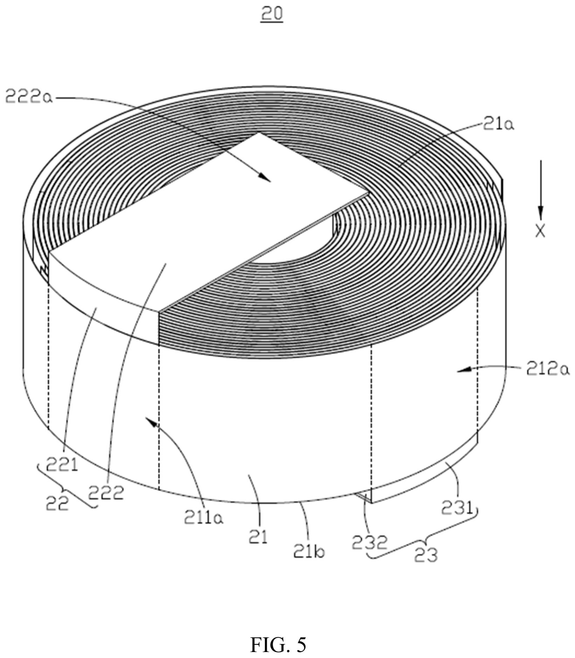

In some embodiments, referring to FIGs. 4 and 5, the electrode plate assembly 21 includes a first electrode plate 211 and a second electrode plate 212 arranged in a wound manner. Along a width direction X of the first electrode plate 211, the wound electrode plate assembly 21 includes a first end face 21a and a second end face 21b opposite to each other. The first electrode plate 211 has a first polarity, and the second electrode plate 212 has a second polarity, where the first polarity and the second polarity are opposite. For example, the first electrode plate 211 is a negative electrode plate, and the second electrode plate 212 is a positive electrode plate. For another example, the first electrode plate 211 is a positive electrode plate, and the second electrode plate 212 is a negative electrode plate.

Referring to FIG. 4, the first electrode plate 211 includes a first current collector 2111 and a first active layer 2112 located on a surface of the first current collector 2111, and the second electrode plate 212 includes a second current collector 2121 and a second active layer 2122 located on a surface of the second current collector 2121. The first current collector 2111 and the second current collector 2121 may be metal layers. As an exemplary illustration, when the first electrode plate 211 is a negative electrode plate, the first current collector 2111 may be a metal layer including at least one of copper, nickel, tantalum, titanium, or the like, such as a copper foil, and the first active layer 2112 includes a negative electrode active material, where the negative electrode active material may include at least one of graphite, hard carbon, soft carbon, silicon, a silicon-oxygen material, a silicon-carbon material, or the like. When the second electrode plate 212 is a positive electrode plate, the second current collector 2121 may be a metal layer including at least one of aluminum, nickel, tantalum, titanium, or the like, such as an aluminum foil, and the second active layer 2122 includes a positive electrode active material, where the positive electrode active material may include at least one of lithium cobalt oxide, lithium nickel cobalt manganese oxide, lithium nickel cobalt aluminum oxide, lithium iron phosphate, lithium manganese iron phosphate, lithium manganese oxide, or the like.

In some embodiments, referring to FIGs. 3 and 4, the first electrode plate 211 is connected to the first tab 22, and the first tab 22 is connected to the first housing portion 11, so that the first tab 22 and the first housing portion 11 have the first polarity. The second electrode plate 212 is connected to the second tab 23, and the second tab 23 is connected to the second housing portion 12, so that the second tab 23 and the second housing portion 12 have the second polarity.

In some embodiments, referring to FIG. 4, a winding start section of the first active layer 2112 is located on a wound inner side of the electrode plate assembly 21 relative to a winding start section of the second active layer 2122.

In some embodiments, referring to FIGs. 4 and 5, the first tab 22 includes a first connecting portion 221 and a first bent portion 222, where the first connecting portion 221 is connected to a first region 211a of a winding tail section of the first current collector 2111. It can be understood that the first region 211a is a region where the first current collector 2111 is connected to the first connecting portion 221, and typically, the first region 211a has a certain planar shape. When a planar shape of the first region 211a is a continuous entirety, a center of the first region 211a is defined as the center of gravity of the planar shape of the first region 211a; when the first region 211a is formed by multiple discrete regions (for example, the first current collector 2111 is connected to the first connecting portion 221 through multiple discrete dotted regions), the center of the first region 211a is defined as a center of the smallest circumscribed circle encompassing the multiple discrete regions. The first bent portion 222 is bent toward the first end face 21a of the electrode plate assembly 21, and along the width direction X of the first electrode plate 211, the first bent portion 222 is located on a side of the electrode plate assembly 21, and the first bent portion 222 is connected to the first housing portion 11.

In some embodiments, referring to FIG. 5, the first bent portion 222 extends along a direction parallel to the first end face 21a.

In some embodiments, the first connecting portion 221 and the first current collector 2111 may be connected by welding, bonding, or pressing, and the first bent portion 222 and the first housing portion 11 may be connected by welding, bonding, or pressing, which are not specifically limited here.

In some embodiments, referring to FIGs. 4 and 5, the second tab 23 includes a second connecting portion 231 and a second bent portion 232, where the second connecting portion 231 is connected to a second region 212a of a winding tail section of the second current collector 2121. It can be understood that the second region 212a is a region where the second current collector 2121 is connected to the second connecting portion 231, and a method for determining the center of the second region 212a is the same as the method for determining the center of the first region 211a. Details are not repeated here. The second bent portion 232 is bent toward the second end face 21b of the electrode plate assembly 21, and along the width direction X of the first electrode plate 211, the second bent portion 232 is located on a side of the electrode plate assembly 21 facing away from the first bent portion 222, and the second bent portion 232 is connected to the second housing portion 12.

In some embodiments, referring to FIG. 5, the second bent portion 232 extends along a direction parallel to the second end face 21b.

In some embodiments, the second connecting portion 231 and the second current collector 2121 may be connected by welding, bonding, or pressing, and the second bent portion 232 and the second housing portion 12 may be connected by welding, bonding, or pressing, which are not specifically limited here.

In some embodiments, referring to FIG. 4, when viewed along the width direction X of the first electrode plate 211, and along a winding direction C of the electrode plate assembly 21 from inside to outside, an angle formed by rotating a ray from a winding center D of the electrode plate assembly 21 to the center of the second region 212a to a ray from the winding center D to the center of the first region 211a is denoted as $\theta$. When a winding length of the first region 211a extending beyond the second region 212a is less than one turn, and $\gamma = \theta$; when the winding length of the first region 211a extending beyond the second region 212a is greater than or equal to one turn, and the number of complete turns of the first region 211a extending beyond the second region 212a is n, and $\gamma = 360° \times n + \theta$. For example, when the winding length of the first region 211a extending beyond the second region 212a is equal to one turn, the number of complete turns n of the first region 211a extending beyond the second region 212a is 1, $\theta = 0°$, and thus $\gamma = 360° \times 1 + 0° = 360°$. A distance from the winding center D of the electrode plate assembly 21 to the center of the first region 211a is denoted as $R_0$.

In some embodiments, $30° \leq \gamma \leq 450°$. This is more conducive to exerting the counteraction effect of a portion of the first electrode plate 211 extending beyond the second region 212a. For example, $\gamma$ may be 30°, 45°, 60°, 90°, 120°, 150°, 180°, 210°, 240°, 270°, 300°, 330°, 360°, 390°, 420°, 450°, or a range defined by any two of the above values. In some embodiments, $30° \leq \gamma \leq 180°$. In some embodiments, $60° \leq \gamma \leq 150°$.

Embodiment 1

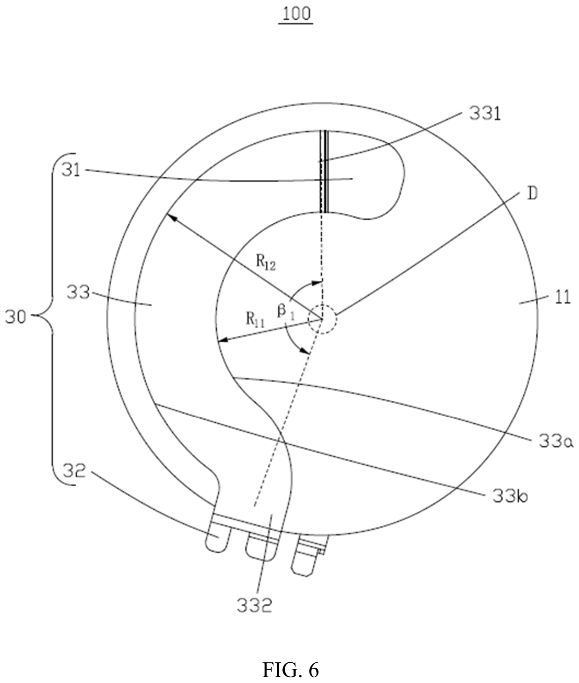

Referring to FIG. 6, the electrochemical apparatus 100 further includes a first connector 30 located outside the housing 10, where the first connector 30 includes a first end portion 31 connected to the first housing portion 11, a second end portion 32 configured to be connected to an external load, and a first arc portion 33 located between the first end portion 31 and the second end portion 32.

The first arc portion 33 includes a first inner edge 33a close to the winding center D of the electrode plate assembly 21 and a first outer edge 33b away from the winding center D, where a distance from the winding center D to the first inner edge 33a is denoted as $R_{11}$, a distance from the winding center D to the first outer edge 33b is denoted as $R_{12}$, and an

equivalent radius $R_1$ of the first arc portion 33 is denoted as $(R_{11} + R_{12})/2$.

The inventors of this application have found through research that magnetic fields generated by the first arc portion 33 and the electrode plate assembly 21 within a same radian range are different. In an example where the electrical device 1000 is a Bluetooth earphone, magnetic field strengths of the electrode plate assembly 21 and the first arc portion 33 are solved using finite element software according to Maxwell's equations. The first arc portion 33 and the first electrode plate 211 or the second electrode plate 212 corresponding to the electrode plate assembly 21 with same radiuses are selected, the power-on current is set to 1A, the magnetic field strengths are normalized, and the magnetic field strength of the electrode plate assembly 21 is used as the reference, to obtain a relationship shown in Table 1 below.

Table 1: Comparison of magnetic field strengths of first arc portion 33 and electrode plate assembly 21 at the same radian

| Magnetic field strength of electrode plate assembly 21 (T) | Magnetic field strength of first arc portion 33 (T) |
| --- | --- |
| 0.00081861 | 0.00147775 |
| Normalized magnetic field of electrode plate assembly 21 | $n_1$ |
| 1 | 1.805 |

Here, $n_1$ represents a first magnetic field strength coefficient of the first arc portion 33. The first magnetic field strength coefficient indicates a ratio of the magnetic field strengths of the first arc portion 33 and the electrode plate assembly 21 at a voice coil of the Bluetooth earphone when the voice coil of the Bluetooth earphone and the first arc portion 33 are disposed on the same side of the electrode plate assembly 21.

The magnetic field strengths of the first arc portions 33 with different equivalent radii are normalized to obtain data shown in Table 2 below.

Table 2: Effect of equivalent radius of first arc portion 33 on magnetic field strength

| $R_1/R_0$ | $n_2$ |
| --- | --- |
| 1 | 1 |
| 0.9554 | 1.01118 |
| 0.9108 | 1.020116 |
| 0.8662 | 1.025795 |
| 0.8216 | 1.0267425 |
| 0.777 | 1.0202865 |
| 0.7324 | 1.002373 |
| 0.6878 | 0.9674685 |
| 0.6432 | 0.9125335 |
| 0.5986 | 0.838148 |

Here, $R_1$ represents the equivalent radius of the first arc portion 33; $R_0$ represents the radius of the electrode plate assembly 21, that is, the distance from the winding center D of the electrode plate assembly 21 to the center of the first region 211a; and $n_2$ represents a second magnetic field strength coefficient of the first arc portion 33. The second magnetic field strength coefficient indicates a variation coefficient of the first magnetic field strength when a ratio of the equivalent radius $R_1$ of the first arc portion 33 to the radius $R_0$ of the electrode plate assembly 21 varies.

The second magnetic field strength coefficient $n_2$, the equivalent radius $R_1$ of the first arc portion 33, and the radius $R_0$ of the electrode plate assembly 21 are fitted to obtain the following relational expression: $n_2 = 6.066 \times (R_1/R_0)^3 - 17.1825 \times (R_1/R_0)^2 + 16 \times (R_1/R_0) - 3.885$.

Still referring to FIG. 6, along an extension direction from the first end portion 31 to the second end portion 32, the first arc portion 33 includes a first start end 331 and a first termination end 332. When an extension direction from the first start end 331 to the first termination end 332 is the same as the winding direction C of the electrode plate assembly 21 from inside to outside, along the winding direction C of the electrode plate assembly 21 from inside to outside, an angle formed by rotating a ray from the winding center D of the electrode plate assembly 21 to the first start end 331 to a ray from the winding center D to the first termination end 332 is denoted as $\alpha_1$, and $\beta_1 = \alpha_1$. When the extension direction from the first start end 331 to the first termination end 332 is opposite to the winding direction C of the electrode plate assembly 21 from inside to outside, along a direction opposite to the winding direction C of the electrode plate assembly 21 from inside to outside, the angle formed by rotating the ray from the winding center D of the electrode plate assembly 21 to the first start end 331 to the ray from the winding center D to the first termination end 332 is denoted as $\alpha_1$, and $\beta_1 = -\alpha_1$.

$30° \leq \gamma + n_1 \times n_2 \times \beta_1 \leq 150°$ is satisfied.

That is, $30° \leq \gamma + (10.95 \times (R_1/R_0)^3 - 31.0144 \times (R_1/R_0)^2 + 28.88 \times (R_1/R_0) - 7.012) \times \beta_1 \leq 150°$ is satisfied.

The inventors of this application have found through research that, due to a special spiral involute structure of the wound electrode plate assembly 21, an effective current path length of the first electrode plate 211 on the wound inner side is shorter than that of the second electrode plate 212 on the wound outer side, thereby generating a strong axial magnetic field at an end face of the electrode plate assembly 21. In this application, on the one hand, by extending the effective length of the first electrode plate 211 on the wound inner side, making the first region 211a extends beyond the second region 212a. When the electrode assembly 20 discharges to generate current, a magnetic field generated by a portion of the first electrode plate 211 extending beyond the second region 212a can at least partially counteract an axial magnetic field generated by the spiral involute structure. On the other hand, by disposing the first arc portion 33 in the first connector 30, and a central angle $\beta_1$ and equivalent radius $R_1$ of the first arc portion 33 and an angle $\gamma$ of the first region 211a extending beyond the second region 212a are controlled to satisfy the condition: $30° \leq \gamma + (10.95 \times (R_1/R_0)^3 - 31.0144 \times (R_1/R_0)^2 + 28.88 \times (R_1/R_0) - 7.012) \times \beta_1 \leq 150°$, the first arc portion 33 can compensate for the insufficiency in the counteraction of the axial magnetic field by the portion of the first electrode plate 211 extending beyond the second region 212a, and eliminate excessive counteraction of the axial magnetic field by the portion of the first electrode plate 211 extending beyond the second region 212a. Moreover, since the first arc portion 33 is located outside the housing 10, the counteraction effect of the axial magnetic field at the end face of the wound structure is greatly improved, thereby facilitating the reduction of interference of the electrochemical apparatus 100 on the electrical device 1000.

For example, the value of $\gamma + (10.95 \times (R_1/R_0)^3 - 31.0144 \times (R_1/R_0)^2 + 28.88 \times (R_1/R_0) - 7.012) \times \beta_1$ may be 30°, 45°, 60°, 75°, 90°, 105°, 120°, 135°, 150°, or a range defined by any two of the above values. In some embodiments, $60° \leq \gamma + (10.95 \times (R_1/R_0)^3 - 31.0144 \times (R_1/R_0)^2 + 28.88 \times (R_1/R_0) - 7.012) \times \beta_1 \leq 120°$. This can further reduce the axial magnetic field at the end face of the wound structure, thereby further reducing the interference on the electrical device 1000.

In some embodiments, $15° \leq \alpha_1 \leq 210°$. This is more conducive to exerting the counteraction effect of the first arc portion 33. For example, $\alpha_1$ may be 15°, 30°, 45°, 60°, 75°, 90°, 105°, 120°, 135°, 150°, 180°, 210°, or a range defined by any two of the above values. In some embodiments, $15° \leq \alpha_1 \leq 45°$. In some embodiments, $60° \leq \alpha_1 \leq 120°$. In some embodiments, $150° \leq \alpha_1 \leq 210°$.

In some embodiments, referring to FIG. 3, the first connector 30 is disposed on a side of the first end face 21a. This facilitates the reduction of the axial magnetic field on the side of the first end face 21a, and facilitates the connection between the first connector 30 and the first housing portion 11, reducing the risk of a short circuit between the first connector 30 and the second housing portion 12.

In some other embodiments, the first connector 30 is disposed on a side of the second end face 21b. This facilitates the reduction of the axial magnetic field on the side of the second end face 21b.

In some embodiments, referring to FIGs. 5 and 6, the first bent portion 222 includes a third region 222a connected to the first housing portion 11, and an angle between a ray from a center of the third region 222a to the center of the first region 211a and a ray from the center of the third region 222a to the first start end 331 is denoted as $\eta$, satisfying $\eta \leq 45°$. This facilitates the reduction of the influence of current passing through the first bent portion 222 on the axial magnetic field, thereby further reducing the interference on the electrical device 1000. A method for determining the center of the third region 222a is the same as the method for determining the center of the first region 211a. Details are not repeated here.

Embodiment 2

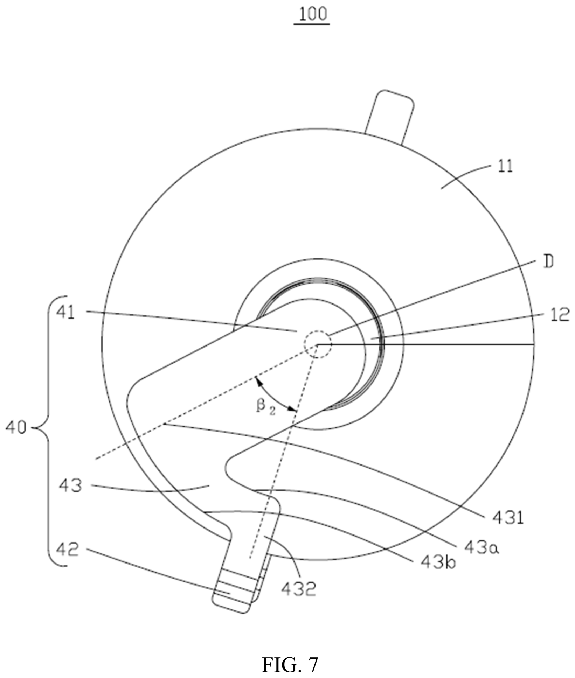

Referring to FIG. 7, the electrochemical apparatus 100 further includes a second connector 40 located outside the housing 10, where the second connector 40 includes a third end portion 41 connected to the second housing portion 12, a fourth end portion 42 configured to be connected to an external load, and a second arc portion 43 located between the third end portion 41 and the fourth end portion 42. The second arc portion 43 includes a second inner edge 43a close to the winding center D of the electrode plate assembly 21 and a second outer edge 43b away from the winding center D, where a distance from the winding center D to the second inner edge 43a is denoted as $R_{21}$, a distance from the winding center D to the second outer edge 43b is denoted as $R_{22}$, and an equivalent radius $R_2$ of the second arc portion 43 is denoted as $(R_{21} + R_{22})/2$.

Along an extension direction from the third end portion 41 to the fourth end portion 42, the second arc portion 43 includes a second start end 431 and a second termination end 432. When an extension direction from the second start end 431 to the second termination end 432 is the same as the winding direction C of the electrode plate assembly 21 from inside to outside, along the winding direction C of the electrode plate assembly 21 from inside to outside, an angle formed by rotating a ray from the winding center D of the electrode plate assembly 21 to the second start end 431 to a ray from the winding center D to the second termination end 432 is denoted as $\alpha_2$, and $\beta_2 = \alpha_2$. When the extension direction from the second start end 431 to the second termination end 432 is opposite to the winding direction C of the electrode plate assembly 21 from inside to outside, along a direction opposite to the winding direction C of the electrode plate assembly 21 from inside to outside, the angle formed by rotating the ray from the winding center D of the electrode plate assembly 21 to the second start end 431 to the ray from the winding center D to the second termination end 432 is denoted as $\alpha_2$, and $\beta_2 = -\alpha_2$.

$30° \leq \gamma - n_1 \times n_2 \times \beta_2 \leq 150°$ is satisfied.

That is, $30° \leq \gamma - (10.95 \times (R_2/R_0)^3 - 31.0144 \times (R_2/R_0)^2 + 28.88 \times (R_2/R_0) - 7.012) \times \beta_2 \leq 150°$ is satisfied.

Similar to the principle of Embodiment 1 above, when the central angle $\beta_2$ and equivalent radius $R_2$ of the second arc portion 43 and the angle $\gamma$ of the first region 211a extending beyond the second region 212 satisfy the condition: $30° \leq \gamma - (10.95 \times (R_2/R_0)^3 - 31.0144 \times (R_2/R_0)^2 + 28.88 \times (R_2/R_0) - 7.012) \times \beta_2 \leq 150°$, the counteraction effect of the axial magnetic field at the end face of the wound structure can be greatly improved, thereby facilitating the reduction of interference of the electrochemical apparatus 100 on the electrical device 1000.

For example, the value of $\gamma - (10.95 \times (R_2/R_0)^3 - 31.0144 \times (R_2/R_0)^2 + 28.88 \times (R_2/R_0) - 7.012) \times \beta_2$ may be 30°, 45°, 60°, 75°, 90°, 105°, 120°, 135°, 150°, or a range defined by any two of the above values. In some embodiments, $60° \leq \gamma - (10.95 \times (R_2/R_0)^3 - 31.0144 \times (R_2/R_0)^2 + 28.88 \times (R_2/R_0) - 7.012) \times \beta_2 \leq 120°$. This can further reduce the axial magnetic field at the end face of the wound structure, thereby further reducing the interference on the electrical device 1000.

In some embodiments, $15° \leq \alpha_2 \leq 210°$. This is more conducive to exerting the counteraction effect of the second arc portion 43. For example, $\alpha_2$ may be 15°, 30°, 45°, 60°, 75°, 90°, 105°, 120°, 135°, 150°, 180°, 210°, or a range defined by any two of the above values. In some embodiments, $15° \leq \alpha_2 \leq 45°$. In some embodiments, $60° \leq \alpha_2 \leq 120°$. In some embodiments, $150° \leq \alpha_2 \leq 210°$.

In some embodiments, referring to FIG. 3, the second connector 40 is disposed on the side of the second end face 21b. This facilitates the reduction of the axial magnetic field on the side of the second end face 21b, and facilitates the connection between the second connector 40 and the second housing portion 12, reducing the risk of a short circuit between the second connector 40 and the first housing portion 11.

In some other embodiments, the second connector 40 is disposed on the side of the first end face 21a. This facilitates the reduction of the axial magnetic field on the side of the first end face 21a.

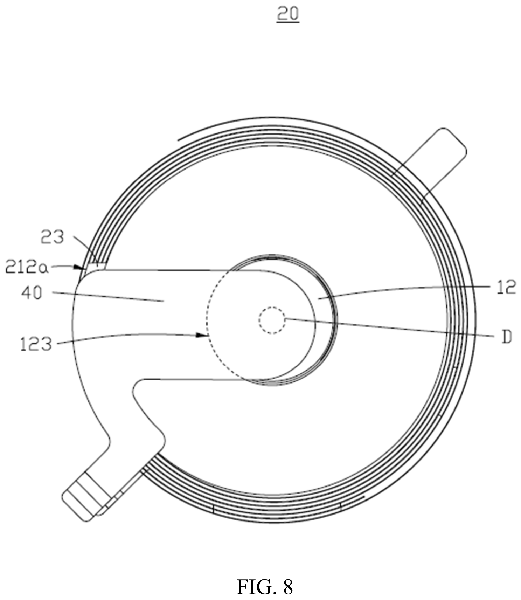

In some embodiments, referring to FIGs. 7 and 8, the second housing portion 12 includes a fourth region 123 connected to the second bent portion 232. An angle between a ray from a center of the fourth region 123 to the center of the second region 212a and a ray from the center of the fourth region 123 to the second start end 431 is denoted as $\delta$, satisfying $\delta \leq 45°$. This facilitates the reduction of the influence of current passing through the second bent portion 232 on the axial magnetic field, thereby further reducing the interference on the electrical device 1000. A method for determining the center of the fourth region 123 is the same as the method for determining the center of the first region 211a. Details are not repeated here.

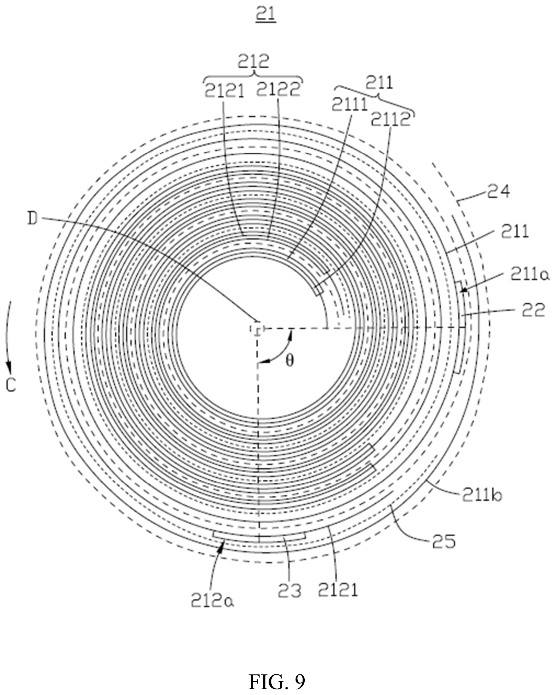

In some embodiments, referring to FIGs. 4 and 9, the winding length of the first region 211a extending beyond the second region 212a is less than one turn. This facilitates the reduction of the extension length of the first current collector 2111, thereby reducing the risk of a short circuit due to misalignment caused by excessive extension of the first current collector 2111.

In some embodiments, referring to FIG. 9, along the winding direction C of the electrode plate assembly 21 from inside to outside, the winding tail section of the first current collector 2111 includes a blank section 211b extending beyond the first region 211a and not provided with the first active layer 2112 on a surface, and the blank section 211b covers the winding tail section of the second current collector 2121. This arrangement provides the blank section 211b of the first current collector 2111 between the winding tail section of the second current collector 2121 and the first housing portion 11, facilitating the enhancement of the isolation effect between the second current collector 2121 and the first housing portion 11, thereby facilitating the reduction of the risk of a short circuit caused by direct contact between the second current collector 2121 and the first housing portion 11.

In some embodiments, referring to FIGs. 4 and 9, the first electrode plate 211 is a negative electrode plate, and the second electrode plate 212 is a positive electrode plate. Along the direction opposite to the winding direction C of the electrode plate assembly 21 from inside to outside, the winding start section of the first active layer 2112 extends beyond the winding start section of the second active layer 2122; and/or along the winding direction C of the electrode plate assembly 21 from inside to outside, the winding tail section of the first active layer 2112 extends beyond the winding tail section of the second active layer 2122. This facilitates the reduction of the risk of lithium precipitation, thereby improving the safety of the electrochemical apparatus 100.

In some embodiments, referring to FIGs. 4 and 9, the electrode plate assembly 21 further includes a first separator 24, where the first separator 24 is disposed between the first electrode plate 211 and the second electrode plate 212, and along the winding direction C of the electrode plate assembly 21 from inside to outside, a winding tail section of the first separator 24 extends beyond the first electrode plate 211. This allows the winding tail section of the first electrode plate 211 to be covered by the first separator 24, facilitating the reduction of the risk of direct contact between the first electrode plate 211 and the second electrode plate 212.

In some embodiments, referring to FIGs. 4 and 9, the electrode plate assembly 21 further includes a second separator 25, where the second separator 25 is disposed between the first electrode plate 211 and the second electrode plate 212, and along the winding direction C of the electrode plate assembly 21 from inside to outside, a winding tail section of the second separator 25 extends beyond the second electrode plate 212. This allows the winding tail section of the second electrode plate 212 to be covered by the second separator 25, facilitating the reduction of the risk of direct contact between the second electrode plate 212 and the first electrode plate 211 or the housing 10.

In some embodiments, along the winding direction C of the electrode plate assembly 21 from inside to outside, the winding tail section of the first separator 24 and/or the second separator 25 is fixed to a body of the electrode plate assembly 21 by an adhesive tape. This facilitates the reduction of the risk of curling of the winding tail section of the first separator 24 and/or the second separator 25.

In some embodiments, referring to FIGs. 4 and 9, the second electrode plate 212 is located between the first separator 24 and the second separator 25. In some other embodiments, the first electrode plate 211 is located between the first separator 24 and the second separator 25.

In some embodiments, the first separator 24 and the second separator 25 may be made of materials such as polyethylene (PE) or polypropylene (PP) and are configured to isolate the first electrode plate 211 and the second electrode plate 212.

In some embodiments, the electrochemical apparatus 100 further includes an insulating member (not shown in the figure), where the insulating member is disposed between the housing 10 and the electrode plate assembly 21. This facilitates the reduction of the risk of direct contact between the electrode plate assembly 21 and the housing 10, thereby facilitating the reduction of the risk of an internal short circuit in the electrochemical apparatus 100.

To verify the counteraction effect of this application on the axial magnetic field of the electrochemical apparatus 100, the following multiple comparison tests were conducted.

In an example where a Bluetooth earphone assembled with a cylindrical steel shell battery with a wound structure, along a winding direction C of an electrode plate assembly 21 from inside to outside, there were a total of 18 layers from an overlapping portion of a negative electrode active layer and a positive electrode active layer at a winding start section to an overlapping portion of the negative electrode active layer and the positive electrode active layer at a winding tail section. A first electrode plate 211 was a negative electrode plate, a negative electrode tab was connected to a bottom wall 112 of a housing, and a positive electrode tab was connected to an electrode pole. Three types of electrode assemblies 20 were prepared, with one electrode assembly 20 satisfying $\gamma = 450°$, one electrode assembly 20 satisfying $\gamma = 270°$, and one electrode assembly 20 satisfying $\gamma = 90°$. A radius $R_0$ of the steel shell battery was 5 mm. A first connector 30 connected to a bottom wall 112 was disposed on a side of the bottom wall 112 of the housing 10, where a first arc portion 33 in the first connector 30 had an inner edge radius $R_{11}$ of 3.4 mm and an outer edge radius $R_{12}$ of 4.7 mm, and thus an equivalent radius $R_1$ of the first arc portion 33 was 4.05 mm. Alternatively, a second connector 40 connected to the electrode pole was disposed on the side of the top wall 111 of the housing 10, where a second arc portion 43 in the second connector 40 had an inner edge radius $R_{21}$ of 3.4 mm and an outer edge radius $R_{22}$ of 4.7 mm, and thus an equivalent radius $R_2$ of the second arc portion 43 was 4.05 mm. In this case, $n_1 \times n_2 = 1.851$, so $\gamma + n_1 \times n_2 \times \beta_1 = \gamma + 1.851\beta_1$; and $\gamma - n_1 \times n_2 \times \beta_2 = \gamma - 1.851\beta_2$. A central angle $\beta_1$ of the first arc portion 33 or a central angle $\beta_2$ of the second arc portion 43 was adjusted, and a current sound level at a voice coil of the Bluetooth earphone on the corresponding side was measured. The test results were shown in Table 3 below.

Table 3: Current sound level of Bluetooth earphone at different $\gamma$, $\beta_1$, and $\beta_2$

| $\eta/\delta$ | $\gamma$ | First arc portion 33 / Second arc portion 43 | $\beta_1/\beta_2$ | $\gamma + 1.851\beta_1$ / $\gamma - 1.851\beta_2$ | Current sound level |
|---|---|---|---|---|---|
| 0° | 450° | First arc portion 33 | -30° | 394.5° | 4 dB |
| | | | -60° | 339° | 2.1 dB |
| | | | -90° | 283.4° | 0.8 dB |
| | | | -120° | 228° | -1.1 dB |
| | | | -150° | 172.4° | -2.7 dB |
| | | | -180° | 116.8° | -4.1 dB |
| | | | -195° | 89° | -5.4 dB |
| | | | -210° | 61° | -3.8 dB |
| | | | -240° | 5.7° | -1 dB |
| | | | 30° | 394.5° | 4.1 dB |
| | | | 60° | 339° | 2.3 dB |

(continued)

| η/δ | γ | First arc portion 33 / Second arc portion 43 | β₁/β₂ | γ + 1.851β₁ / γ - 1.851β₂ | Current sound level |
|---|---|---|---|---|---|
| 0° | | Second arc portion 43 | 90° | 283.4° | 0.8 dB |
| | | | 120° | 228° | -1 dB |
| | | | 150° | 172.4° | -2.6 dB |
| | | | 180° | 116.8° | -3.8 dB |
| | | | 195° | 89° | -5.1 dB |
| | | | 210° | 61° | -3.5 dB |
| | | | 240° | 5.7° | -0.6 dB |
| 0° | 270° | First arc portion 33 | -45° | 186° | 1.2 dB |
| | | | -60° | 159° | -1.1 dB |
| | | | -90° | 103° | -4.1 dB |
| | | | -95° | 94° | -4.9 dB |
| | | | -100° | 85° | -4.7 dB |
| | | | -120° | 48° | -1.9 dB |
| | | | -150° | -7° | 0.3 dB |
| 0° | | Second arc portion 43 | 45° | 186° | 1.3 dB |
| | | | 60° | 159° | -2.1 dB |
| | | | 90° | 103° | -4.0 dB |
| | | | 95° | 94° | -4.6 dB |
| | | | 100° | 85° | -4.8 dB |
| | | | 120° | 48° | -2.6 dB |
| | | | 150° | -7° | 0.8 dB |
| 0° | 90° | First arc portion 33 | -60° | -21.06° | 1.2 dB |
| | | | -30° | 34.5° | -1.9 dB |
| | | | -15° | 62° | -4.1 dB |
| | | | 15° | 118° | -3.9 dB |
| | | | 30° | 145° | -1.8 dB |
| | | | 60° | 201° | 0.9 dB |
| 0° | | Second arc portion 43 | -60° | -21.06° | 1.4 dB |
| | | | -30° | 34.5° | -1.7 dB |
| | | | -15° | 62° | -4 dB |
| | | | 15° | 118° | -3.3 dB |
| | | | 30° | 145° | -1.3 dB |
| | | | 60° | 201° | 1.7 dB |

Here, lower sound indicates a lower decibel level, with 0 dB being the minimum sound audible to the human ear.

From the comparison in Table 3, it can be seen that when the steel shell battery satisfies $30° \leq \gamma + (10.95 \times (R_1/R_0)^3 - 31.0144 \times (R_1/R_0)^2 + 28.88 \times (R_1/R_0) - 7.012) \times \beta_1 \leq 180°$, or $30° \leq \gamma - (10.95 \times (R_2/R_0)^3 - 31.0144 \times (R_2/R_0)^2 + 28.88 \times (R_2/R_0) - 7.012) \times \beta_2 \leq 180°$, the Bluetooth earphone exhibits a lower current sound level. Further, when $60° \leq \gamma + (10.95 \times (R_1/R_0)^3 - 31.0144 \times (R_1/R_0)^2 + 28.88 \times (R_1/R_0) - 7.012) \times \beta_1 \leq 120°$, the current sound level of the Bluetooth earphone can be further significantly reduced.

In addition, those of ordinary skill in the art should recognize that the above embodiments are only used to illustrate this application and are not intended to limit this application. Any modifications, equivalent substitutions, improvements, and the like made within the spirit and principles of this application should be included within the protection scope of this application.

**Claims**

1.  An electrochemical apparatus, **characterized in that**, comprising:

    a housing comprising a first housing portion and a second housing portion with opposite polarities; and
    an electrode assembly accommodated in the housing, wherein the electrode assembly comprises:

    an electrode plate assembly comprising a first electrode plate and a second electrode plate arranged in a wound manner, wherein the first electrode plate comprises a first current collector and a first active layer located on a surface of the first current collector, the second electrode plate comprises a second current collector and a second active layer located on a surface of the second current collector, and a winding start section of the first active layer is located on a wound inner side of the electrode plate assembly relative to a winding start section of the second active layer;
    a first tab, wherein the first tab is connected to a first region of a winding tail section of the first current collector and the first housing portion; and
    a second tab, wherein the second tab is connected to a second region of a winding tail section of the second current collector and the second housing portion, and along a winding direction of the electrode plate assembly from inside to outside, the first region extends beyond the second region; wherein
    when viewed along a width direction of the first electrode plate, along the winding direction of the electrode plate assembly from inside to outside, an angle formed by rotating a ray from a winding center of the electrode plate assembly to a center of the second region to a ray from the winding center to a center of the first region is denoted as $\theta$; when a winding length of the first region extending beyond the second region is less than one turn, and $\gamma = \theta$; when the winding length of the first region extending beyond the second region is greater than or equal to one turn, and the number of complete turns of the first region extending beyond the second region is n, and $\gamma = 360° \times n + \theta$; and a distance from the winding center of the electrode plate assembly to the center of the first region is denoted as $R_0$; and
    the electrochemical apparatus satisfies at least one of the following conditions:

    (1) the electrochemical apparatus further comprises a first connector located outside the housing, the first connector comprising a first end portion connected to the first housing portion, a second end portion configured to be connected to an external load, and a first arc portion located between the first end portion and the second end portion, wherein the first arc portion comprises a first inner edge close to the winding center of the electrode plate assembly and a first outer edge away from the winding center, a distance from the winding center to the first inner edge is denoted as $R_{11}$, a distance from the winding center to the first outer edge is denoted as $R_{12}$, and an equivalent radius $R_1$ of the first arc portion is denoted as $(R_{11} + R_{12})/2$; and
    along an extension direction from the first end portion to the second end portion, the first arc portion comprises a first start end and a first termination end; when an extension direction from the first start end to the first termination end is the same as the winding direction of the electrode plate assembly from inside to outside, along the winding direction of the electrode plate assembly from inside to outside, an angle formed by rotating a ray from the winding center of the electrode plate assembly to the first start end to a ray from the winding center to the first termination end is denoted as $\alpha_1$, and $\beta_1 = \alpha_1$; and when the extension direction from the first start end to the first termination end is opposite to the winding direction of the electrode plate assembly from inside to outside, along a direction opposite to the winding direction of the electrode plate assembly from inside to outside, the angle formed by rotating the ray from the winding center of the electrode plate assembly to the first start end to the ray from the winding center to the first termination end is denoted as $\alpha_1$, and $\beta_1 = -\alpha_1$; satisfying:

    $30° \leq \gamma + (10.95 \times (R_1/R_0)^3 - 31.0144 \times (R_1/R_0)^2 + 28.88 \times (R_1/R_0) - 7.012) \times \beta_1 \leq 180°$; or

    (2) the electrochemical apparatus further comprises a second connector located outside the housing, the second connector comprising a third end portion connected to the second housing portion, a fourth end portion configured to be connected to an external load, and a second arc portion located between the third end portion and the fourth end portion, wherein the second arc portion comprises a second inner edge close to the winding center of the electrode plate assembly and a second outer edge away from the winding center, a distance from the winding center to the second inner edge is denoted as $R_{21}$, a distance from the winding center to the second outer edge is denoted as $R_{22}$, and an equivalent radius $R_2$ of the second arc portion is denoted as $(R_{21} + R_{22})/2$; and

along an extension direction from the third end portion to the fourth end portion, the second arc portion comprises a second start end and a second termination end; when an extension direction from the second start end to the second termination end is the same as the winding direction of the electrode plate assembly from inside to outside, along the winding direction of the electrode plate assembly from inside to outside, an angle formed by rotating a ray from the winding center of the electrode plate assembly to the second start end to a ray from the winding center to the second termination end is denoted as $\alpha_2$, and $\beta_2 = \alpha_2$; and when the extension direction from the second start end to the second termination end is opposite to the winding direction of the electrode plate assembly from inside to outside, along a direction opposite to the winding direction of the electrode plate assembly from inside to outside, the angle formed by rotating the ray from the winding center of the electrode plate assembly to the second start end to the ray from the winding center to the second termination end is denoted as $\alpha_2$, and $\beta_2 = -\alpha_2$; satisfying:

$$30° \leq \gamma - (10.95 \times (R_2/R_0)^3 - 31.0144 \times (R_2/R_0)^2 + 28.88 \times (R_2/R_0) - 7.012) \times \beta_2 \leq 180°.$$

2. The electrochemical apparatus according to claim 1, **characterized in that**, the electrochemical apparatus satisfies at least one of the following conditions:

$$60° \leq \gamma + (10.95 \times (R_1/R_0)^3 - 31.0144 \times (R_1/R_0)^2 + 28.88 \times (R_1/R_0) - 7.012) \times \beta_1 \leq 120°; \text{ or} \tag{1}$$

$$60° \leq \gamma - (10.95 \times (R_2/R_0)^3 - 31.0144 \times (R_2/R_0)^2 + 28.88 \times (R_2/R_0) - 7.012) \times \beta_2 \leq 120° \tag{2}$$

3. The electrochemical apparatus according to claim 1, **characterized in that**, the first tab comprises a first connecting portion and a first bent portion, the first connecting portion is connected to the first region, the first bent portion is bent toward a first end face of the electrode plate assembly, and along the width direction of the first electrode plate, the first bent portion is located on a side of the electrode plate assembly, and the first bent portion is connected to the first housing portion; and the second tab comprises a second connecting portion and a second bent portion, the second connecting portion is connected to the second region, the second bent portion is bent toward a second end face of the electrode plate assembly, the second end face is opposite to the first end face along the width direction of the first electrode plate, and along the width direction of the first electrode plate, the second bent portion is located on a side of the electrode plate assembly facing away from the first bent portion.

4. The electrochemical apparatus according to claim 3, **characterized in that**, the electrochemical apparatus satisfies at least one of the following conditions:

(1) the first bent portion comprises a third region connected to the first housing portion, an angle between a ray from a center of the third region to the center of the first region and a ray from the center of the third region to the first start end is denoted as $\eta$, satisfying $\eta \leq 45°$;
(2) the second housing portion comprises a fourth region connected to the second bent portion, and an angle between a ray from a center of the fourth region to the center of the second region and a ray from the center of the fourth region to the second start end is denoted as $\delta$, satisfying $\delta \leq 45°$;
(3) the first housing portion comprises a top wall, a bottom wall, and a side wall, the second housing portion comprises an electrode pole, the top wall is provided with a through hole, and the electrode pole is disposed in the through hole;
(4) the first connector is disposed on a side of the first end face; or
(5) the second connector is disposed on a side of the second end face.

5. The electrochemical apparatus according to claim 1, **characterized in that**, along the winding direction of the electrode plate assembly from inside to outside, the winding tail section of the first current collector comprises a blank section extending beyond the first region and not provided with the first active layer on a surface, and the blank section covers the winding tail section of the second current collector.

6. The electrochemical apparatus according to claim 1, **characterized in that**, the electrochemical apparatus satisfies at least one of the following conditions:

    (1)

$$30° \leq \gamma \leq 450°;$$

    (2)

$$15° \leq \alpha_1 \leq 210°;$$

    (3)

$$15° \leq \alpha_2 \leq 210°;$$

    or
    (4) the winding length of the first region extending beyond the second region is less than one turn.

7. The electrochemical apparatus according to claim 1, **characterized in that**, the first electrode plate is a negative electrode plate, and the second electrode plate is a positive electrode plate; wherein

    the winding start section of the first active layer extends beyond the winding start section of the second active layer along the direction opposite to the winding direction of the electrode plate assembly from inside to outside, and/or a winding tail section of the first active layer extends beyond a winding tail section of the second active layer along the winding direction of the electrode plate assembly from inside to outside.

8. The electrochemical apparatus according to any one of claims 1 to 7, **characterized in that**, satisfying at least one of the following conditions:

    (a) the electrode plate assembly further comprises a first separator, wherein the first separator is disposed between the first electrode plate and the second electrode plate, and along the winding direction of the electrode plate assembly from inside to outside, a winding termination end of the first separator extends beyond the first electrode plate; or
    (b) the electrode plate assembly further comprises a second separator, wherein the second separator is disposed between the first electrode plate and the second electrode plate, and along the winding direction of the electrode plate assembly from inside to outside, a winding termination end of the second separator extends beyond the second electrode plate.

9. The electrochemical apparatus according to any one of claims 1 to 7, **characterized in that**, the electrochemical apparatus further comprises an insulating member, and the insulating member is disposed between the housing and the electrode plate assembly.

10. An electrical device, **characterized in that**, comprising the electrochemical apparatus according to any one of claims 1 to 9.

1000

FIG. 1

<u>100</u>

FIG. 2

FIG. 3

FIG. 4

20

FIG. 5

FIG. 6

FIG. 7

20

FIG. 8

FIG. 9

## INTERNATIONAL SEARCH REPORT

| International application No. |
| --- |
| **PCT/CN2023/103962** |

| **A.** | **CLASSIFICATION OF SUBJECT MATTER** |
| --- | --- |

H01M10/0587(2010.01)i

According to International Patent Classification (IPC) or to both national classification and IPC

| **B.** | **FIELDS SEARCHED** |
| --- | --- |

Minimum documentation searched (classification system followed by classification symbols)

IPC: H01M

Documentation searched other than minimum documentation to the extent that such documents are included in the fields searched

Electronic data base consulted during the international search (name of data base and, where practicable, search terms used)

CNABS; CNTXT; CNKI; VEN; WOTXT; EPTXT; USTXT: 电极, 夹角, 距离, 间距, 连接, electrode, pole, angle, distance, space, connect, join

| **C.** | **DOCUMENTS CONSIDERED TO BE RELEVANT** |
| --- | --- |

| Category* | Citation of document, with indication, where appropriate, of the relevant passages | Relevant to claim No. |
| --- | --- | --- |
| A | CN 114583236 A (NINGDE AMPEREX TECHNOLOGY LTD.) 03 June 2022 (2022-06-03) description, paragraphs [0060]-[0100] | 1-10 |
| A | CN 114938691 A (NINGDE AMPEREX TECHNOLOGY LTD.) 23 August 2022 (2022-08-23) entire document | 1-10 |
| A | CN 113330631 A (DONGGUAN POWERAMP TECHNOLOGY LTD. et al.) 31 August 2021 (2021-08-31) entire document | 1-10 |
| A | CN 113193165 A (MICROVAST POWER SYSTEMS CO., LTD.) 30 July 2021 (2021-07-30) entire document | 1-10 |

☐ Further documents are listed in the continuation of Box C.   ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **24 January 2024** | **03 February 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/103962**

| Patent document cited in search report | | | Publication date (day/month/year) | Patent family member(s) | | | Publication date (day/month/year) |
|---|---|---|---|---|---|---|---|
| CN | 114583236 | A | 03 June 2022 | WO | 2023165349 | A1 | 07 September 2023 |
| CN | 114938691 | A | 23 August 2022 | CN | 216288852 | U | 12 April 2022 |
| | | | | WO | 2023070590 | A1 | 04 May 2023 |
| CN | 113330631 | A | 31 August 2021 | CN | 113330631 | B | 20 December 2022 |
| | | | | WO | 2022051915 | A1 | 17 March 2022 |
| CN | 113193165 | A | 30 July 2021 | CN | 113193165 | B | 06 June 2023 |
| | | | | WO | 2022247665 | A1 | 01 December 2022 |

Form PCT/ISA/210 (patent family annex) (July 2022)